# DEMANDE DE BREVET EUROPEEN

(11) **EP 1 180 740 A1**
(43) Date de publication de la demande: **20.02.2002**
(21) Numéro de dépôt: 01402115.8
(22) Date de dépôt: 06.08.2001
(51) Int. Cl.: G06F 17/30

(54) **Procédé de mémorisation de données dans un fichier multimedia utilisant des bases de temps relatives**

(30) Priorité: 14.08.2000 FR 0010627
(71) Demandeur: ALCATEL, 75008 Paris (FR)
(72) Inventeur: Comps, Christophe, 33610 Cestas (FR); Boudet, Daniel, 75015 Paris (FR); Sarremejean, Xavier, 95490 Vaureal (FR)
(74) Mandataire: Sciaux, Edmond

(57) **Abrégé**

Procédé de mémorisation de données dans un fichier multimédia, le fichier multimédia contenant un indicateur de base de temps absolue (ATB) et au moins une piste (T₁...T_{N}) dans laquelle ou dans lesquelles sont mémorisées les données. Ces données comportent des valeurs temporelles.
Le procédé se caractérise en ce qu'on associe à chaque piste, au moins un indicateur de base de temps relative (RTB₁), fonction de ladite base de temps absolue, et en ce qu'on détermine certains ou toutes les valeurs temporelles contenues dans une piste, par rapport à un indicateur de base de temps relative associé à la piste concernée.

## Description

La présente invention concerne un procédé de mémorisation de données dans un fichier multimédia. Elle s'applique particulièrement bien aux systèmes embarqués tels des téléphones portables, des ordinateurs de poche ou tout autre appareil pouvant posséder des capacités multimédias et pour lequel la taille des fichiers multimédias et la puissance de calcul nécessaire à leur traitement constituent un problème.

Il existe de très nombreux procédés de mémorisation de données dans des fichiers monomédias, c'est-à-dire ne concernant qu'un type particulier de données. Par exemple, on peut citer les formats JPEG (*Joint Photographic Expert Group*) pour la mémorisation d'images, WAV pour la mémorisation de données sonores, RTF *(Rich Tagged File)* pour la mémorisation de textes...
Il existe aussi des procédés de mémorisation de données dans des fichiers multimédias, c'est-à-dire que dans un même fichier on intègre des données de différentes natures. À titre d'exemple, on peut citer le format MPEG (Motion Picture *Expert Group)* intégrant des données sonores et vidéos.

Les fichiers MIDI (pour *Musical Instrument Digital Interface*, en langue anglaise) permettent la mémorisation de données sonores dans des fichiers structurées en plusieurs pistes (souvent appelées *track* suivant la terminologie en langue anglaise), chaque piste correspondant généralement à un instrument de musique. Les données contenues dans chaque piste peuvent être des valeurs temporelles, c'est-à-dire soit des durées de notes soit des délais entre deux notes successives. Ces valeurs temporelles sont données en fonction d'une base de temps absolue dont la valeur est insérée dans une entête du fichier MIDI, sous la forme de deux champs : une signature temporelle et un tempo.
Le codage de chaque valeur temporelle est fait sous la forme de la valeur de multiplicande de cette base de temps absolue. Par exemple, si la base de temps est de 100 ms, une durée de 1 s sera codée 10.

Le principe de la base de temps absolue ne fonctionne de façon satisfaisante que dans la mesure où toutes les valeurs temporelles sont du même ordre de grandeur. C'est généralement le cas dans le cadre d'un fichier MIDI dans lequel toutes les données concernent du son.
Toutefois, dans le cadre d'un fichier multimédia incorporant des données de différentes natures, ce principe de la base de temps absolue ne peut plus être utilisé de façon satisfaisante.

En effet, les valeurs temporelles peuvent être très hétérogènes en fonction du type de données. Par exemple, les valeurs temporelles concernant une séquence d'images sont généralement de quelques secondes, tandis que les valeurs temporelles de séquences musicales sont plutôt aux environs des 100 ms.
Si on utilise le principe de la base de temps absolue telle que décrite dans les spécifications des fichiers MIDI, cette base de temps pour tenir compte de l'ensemble des valeurs temporelles devra être inférieure ou égale à la plus petite d'entre elles.
Par conséquent, les valeurs les plus élevées seront alors codées sur un grand nombre de bits.
Par exemple, avec une base de temps absolue de 100 ms, une valeur temporelle de 10 secondes doit être codée 100. Par conséquent, les valeurs temporelles doivent être codées sur un minimum de 7 bits par valeur.

Or, dans le cadre d'un système embarqué, il existe des contraintes sévères en ce qui concerne la taille des fichiers :
- D'une part, la mémoire disponible est limitée pour des raisons d'encombrement et d'autonomie.
- D'autre part, les fichiers multimédias peuvent être amenés à être téléchargés depuis un centre serveur, et le temps de communication est donné directement par leur taille.

Le but de la présente invention est de réduire la taille des fichiers multimédias, tout en permettant la mémorisation de tout type de données.

À ces fins, l'invention a pour objet un procédé de mémorisation de données dans un fichier multimédia, le fichier multimédia contenant un indicateur de base de temps absolue et au moins une piste dans laquelle ou dans lesquelles sont mémorisées les données. Ces données comportent des valeurs temporelles.
Le procédé se caractérise en ce qu'on associe à chaque piste, au moins un indicateur d'une base de temps relative, fonction de ladite base de temps absolue, et en ce qu'on détermine certaines ou toutes les valeurs temporelles contenues dans une piste, par rapport à un indicateur de base de temps relative associé à la piste concernée.

L'invention et ses avantages apparaîtront de façon plus claire dans la description qui suit, en liaison avec les figures jointes.
La figure 1 schématise un fichier multimédia conforme à l'invention.
La figure 2 représente une vue détaillée d'une piste contenue dans un fichier multimédia selon l'invention.
La figure 3 illustre une variante de réalisation de l'invention.

Selon l'invention, les données peuvent être des valeurs temporelles. Ces valeurs temporelles peuvent représenter une durée, une valeur de début ou une valeur de fin de la présentation à un utilisateur, d'une autre donnée (image, son, texte...). Il peut donc s'agir de la durée d'affichage d'une image, ou bien la durée de tenu d'une note de musique ou sa date de commencement, ou la durée d'attente entre deux événements, etc.

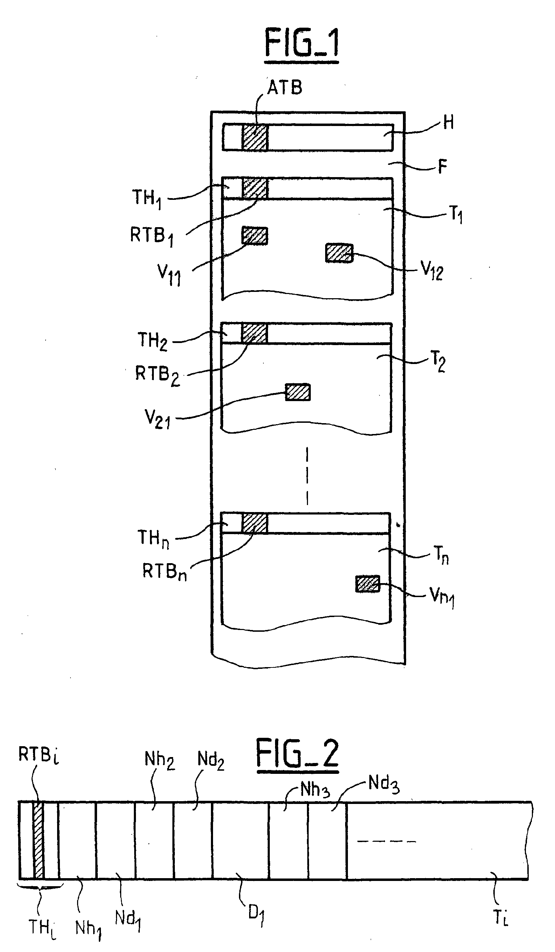

La figure 1 schématise la structure d'un fichier multimédia conforme à l'invention. Ce fichier F comporte un entête H et plusieurs pistes T₁, T₂... Tₙ.
L'entête H comporte diverses informations communes à l'ensemble des pistes (identification...) que l'on ne détaillera pas hormis un indicateur de base de temps absolue ATB (pour *Absolute Time Base*, en anglais).
Cette base de temps absolue ATB détermine la valeur temporelle la plus petite qui peut être présente dans le fichier multimédia. Elle peut être calculée comme étant le plus grand commun diviseur (PGCD) de l'ensemble des valeurs temporelles comprises dans le fichier multimédia F.

Comme dit précédemment, le fichier multimédia F comporte en outre un ensemble de pistes (éventuellement réduit à une unique piste) T₁, T₂... Tₙ. Chacune de ces pistes peut être dévolue à un unique type de données. Par exemple, la piste T₁ peut comporter une séquence d'images, la piste T₂ peut correspondre à une piste MIDI, la piste Tₙ peut comporter des séquences de messages textuels etc. Ces différentes pistes peuvent être destinées à être lues et présentées à l'utilisateur simultanément.

À l'intérieur de ces pistes, on peut trouver des valeurs temporelles, qui sont associées à d'autres données contenues dans la piste. Cette association peut prendre différentes formes :
- On peut prévoir de faire suivre chaque donnée par une valeur numérique de façon systématique. Ce procédé peut être utilisé pour préciser la durée de présentation d'une donnée par exemple (durée d'une note...).
- On peut aussi prévoir d'insérer des valeurs temporelles de façon optionnelle lorsqu'on en a besoin. Ce procédé peut être par exemple utilisé pour préciser un délai entre deux présentations de données. L'omission de cette valeur temporelle peut alors signifier que les deux données doivent être présentées de façon simultanée (accord de plusieurs notes, par exemple).

Ces deux possibilités peuvent être combinées et il est tout à fait possible d'utiliser d'autres façons de faire sans pour autant sortir du cadre de l'invention.

La figure 2 détaille une structure possible pour une piste contenue dans un fichier multimédia conforme à l'invention. Selon cet exemple, la piste ne contient que des données sonores.
Cette piste Tᵢ comporte un entête THᵢ et des données relatives à du son. Un premier champ Nh₁ représente la hauteur d'une première note, et un deuxième champ Nd₁ représente sa durée. De même, les champs Nh₂ et Nd₂ définissent une deuxième note.
Le champ D₁ représente un délai, c'est à dire une période d'attente avant de présenter les notes suivantes de la piste.
Les champs Nh₃ et Nd₃ représentent respectivement la hauteur et la durée d'une troisième note.
Les champs de définition d'une note ou d'un délai peuvent ainsi se suivre, au sein de la piste Tᵢ.
La piste Tᵢ comporte dans son entête THᵢ un indicateur de base de temps relative RTBᵢ. La valeur de cette base de temps relative est donnée en fonction de la base de temps absolue ATB.

Selon une mise en oeuvre de l'invention, on choisit de déterminer les durées en fonction de la base de temps relative RTBᵢ, et les délais entre notes, uniquement en fonction de la base de temps absolue ATB.
Ainsi, les valeurs temporelles Nd₁, Nd₂, Nd₃ sont déterminées par rapport à cette base de temps relative RTBᵢ, tandis que la valeur temporelle D₁ est déterminée par rapport à la base de temps absolue ATB.

De même, sur la figure 1, les pistes T₁, T₂... Tₙ comportent des entêtes, TH₁, TH₂... THₙ respectivement. Chacun de ces entêtes contient un indicateur de base de temps relative, respectivement RTB₁, RTB₂... RTBₙ.
Une variante de réalisation pourrait consister à mémoriser ces indicateurs de bases de temps en dehors des entêtes des pistes, par exemple dans une table contenue dans l'entête H du fichier multimédia.
Chaque piste comporte de surcroît des valeurs temporelles, v₁₁, v₁₂, v₂₁, vₙ₁. Ces valeurs temporelles sont déterminées par rapport aux bases de temps relatives. Préférentiellement, une valeur temporelle est déterminée par rapport à l'indicateur base de temps contenue dans la même piste qu'elle.

Le tableau ci-dessous donne un exemple numérique pour les valeurs temporelles présentes sur la figure 1 :

| | |
|---|---|
| V₁₁ | 100 ms |
| V₁₂ | 150 ms |
| V₂₁ | 0,5 s |
| Vₙ₁ | 6 s |

On détermine la base de temps absolue comme étant le plus grand commun diviseur de l'ensemble des valeurs temporelles. Ici, donc, l'indicateur de base de temps absolue ATB prend la valeur 50 ms.

Ensuite, on détermine les bases de temps relatives RTB₁, RTB₂ et RTBₙ comme étant les plus grands communs diviseurs des valeurs temporelles contenues dans leur piste respective.
Ainsi, on a une base de temps relative égale à 50 ms pour la piste 1, à 500 ms pour la piste 2 et à 6 s pour la piste n.
Les indicateurs de bases de temps relatives valent donc :
RTB₁ = 1
RTB₂ = 10
RTBₙ = 120

Ensuite on détermine les valeurs temporelles par rapport à ces indications de bases de temps relatives, et on obtient le tableau de valeurs suivant :

| | |
|---|---|
| V₁₁ | 2 |
| V₁₂ | 3 |
| V₂₁ | 1 |
| Vₙ₁ | 1 |

Si on avait codé les valeurs temporelles en utilisant simplement une base de temps absolue, on aurait du coder des valeurs temporelles allant de 2 fois à 120 fois la base de temps absolue. Il aurait par conséquent fallu coder les valeurs temporelles sur 7 bits.

De par l'utilisation de bases de temps relatives, les valeurs temporelles ne s'étalent que de 1 à 3 et ne nécessitent donc que 2 bis pour leur codage.

Par conséquent, grâce au procédé de l'invention on obtient un gain de 5*(7 bits - 2 bits)- 3*7bits = 4 bits

Le premier terme représente le gain que l'on effectue sur les 5 valeurs temporelles présentes. Le second terme est la perte due à l'ajout des indicateurs de bases de temps relatives dans les entêtes de 3 pistes T₁, T₂ et Tₙ.
Lorsque le nombre de valeurs temporelles augmente, la perte due à ce second terme décroît proportionnellement.

Dans un cas réel, c'est à dire sur un fichier de plusieurs centaines de kilo-octets voire de plusieurs mégaoctets, le gain peut atteindre les 20 % environ.

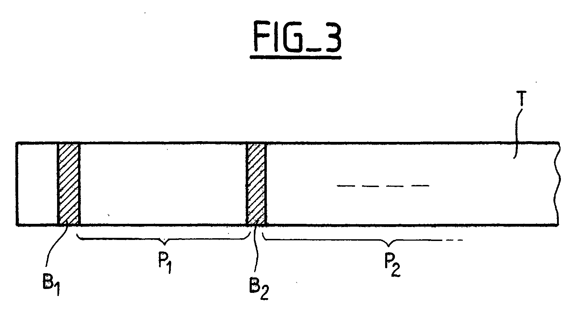

La figure 3 illustre une variante de réalisation, dans laquelle les indicateurs de bases de temps relatives peuvent être insérés dans une piste T, en dehors du seul entête. Auquel cas, on peut facilement associer plusieurs indicateurs de bases de temps B₁, B₂ à une même piste T.
Plus précisément, chaque indicateur de base de temps relative est associé de façon unique à une partie de la piste. Par exemple, sur cette fgure 3, l'indicateur de base de temps B₁ est associé à la partie P₁, l'indicateur de base de temps B₂ est associé à la partie P₂ et ainsi de suite.
Préférentiellement, un indicateur de base de temps définit une partie associée qui lui succède immédiatement et qui se termine au prochain indicateur de base de temps.
Autrement dit, les valeurs temporelles contenues dans une piste sont définies par rapport à l'indicateur de base de temps qui le précède immédiatement.
Un avantage d'une telle mise en oeuvre est de facilement tenir compte de variations locales du rythme des données multimédias à stocker. Ainsi, dans le cas de données musicales, il peut arriver que le rythme passe d'une vitesse lente (Largo, par exemple, suivant la notation musicale classique) à une vitesse soutenue (par exemple, *allegro*) au sein d'une même piste.

En ce cas, il est intéressant d'insérer un indicateur de base de temps relative au début du passage en rythme soutenu pour adapter la base de temps aux valeurs temporelles à coder.

## Revendications

1. Procédé de mémorisation de données dans un fichier multimédia, ledit fichier multimédia contenant un indicateur de base de temps absolue et au moins une piste dans laquelle ou dans lesquelles sont mémorisées lesdites données, lesdites données comportant des valeurs temporelles, et ledit procédé étant **caractérisé en ce qu'**on associe à chaque piste au moins un indicateur de base de temps relative, fonction de ladite base de temps absolue, et **en ce qu'**on détermine certaines ou toutes les valeurs temporelles contenues dans une piste, par rapport à un indicateur de base de temps relative associé à ladite piste.

2. Procédé selon la revendication, dans lequel chaque indicateur de base de temps relative est stocké dans la piste à laquelle elle est associée.

3. Procédé selon l'une des revendications 1 ou 2, dans lequel chacune desdites pistes est dévolue à un unique type de données.

4. Procédé selon l'une des revendications précédentes, dans lequel chaque indicateur de base de temps relative est déterminé comme étant le plus grand commun diviseur des valeurs temporelles contenues dans la piste à laquelle elle est associée.

5. Procédé selon l'une des revendications 1 à 3, dans lequel on associe plusieurs indicateurs de bases de temps relatives à une même piste, chacun desdits indicateurs de bases de temps relatives étant associé de façon unique à une partie de ladite piste.

6. Procédé selon la revendication précédente, dans lequel chaque indicateur de base de temps relative est déterminé comme étant le plus grand commun diviseur des valeurs temporelles contenues dans la partie à laquelle elle est associée.

7. Procédé selon l'une des revendications 5 ou 6, dans lequel chaque valeur temporelle est définie par rapport à l'indicateur de base de temps relative qui le précède au sein de la piste la contenant.
